# EUROPÄISCHE PATENTSCHRIFT

(11) **EP 0 399 371 B1**
(45) Veröffentlichungstag und Bekanntmachung des Hinweises auf die Patenterteilung: **07.01.1993**
(21) Anmeldenummer: 90109331.0
(22) Anmeldetag: 17.05.1990
(51) Int. Cl.: F16B 12/40, F16B 12/46

(54) **Verbindungsbeschlag für Stabelemente**
Joint fitting for bar elements
Ferrure d'assemblage pour éléments en forme de barre

(30) Priorität: 20.05.1989 DE 8906283 U
(43) Veröffentlichungstag der Anmeldung: 28.11.1990
(73) Patentinhaber: Otto, Wulf Markus, 70567 Stuttgart (DE)
(72) Erfinder: Walter, Josef, D-7000 Stuttgart 1 (DE)
(74) Vertreter: Dreiss, Fuhlendorf, Steimle & Becker, Patentanwälte

(56) Entgegenhaltungen:
- CH-A- 4 388 848
- DE-A- 2 607 738
- DE-A- 2 902 307
- GB-A- 1 433 506

## Beschreibung

Die Erfindung betrifft einen Verbindungsbeschlag für Stabelemente zum Aufbau von räumlichen oder ebenen Fach- oder Tragwerken, insbesondere Messeständen, Vitrinen oder Tischen, mit mindestens zwei von einem polyederförmigen Grundkörper an dessen Außenflächen getragenen Verbindungszapfen, die im Querschnitt angepaßt in die hohlen Enden der zu verbindenden Stabelemente eingreifen, wobei jeder Verbindungszapfen mindestens ein Klemmsegment aufweist, das mittels eines durch eine Wandbohrung der Stabelemente hindurch spann- und lösbaren Spannglieds innerhalb des hohlen Stabelementendes gegen die Stabelementinnenwandung spannbar ist.

Aus der CH-A-438 848 ist ein Verbindungsbeschlag bekannt, bei dem auf dem würfelförmigen Grundkörper auf dessen Außenflächen die Verbindungszapfen befestigbar sind. Die Verbindungszapfen sind über deren Gesamtlänge zweigeteilt augebildet, wobei ein U-Profil einen Aufnahmebereich bildet, der stirnseitig mit dem Grundkörper verbunden ist und an dem gegenüber den U-Schenkeln angeordnet, parallel hierzu verlaufend, ein plattenartiges Klemmsegment mittels einer Madenschraube abspreizbar gehalten ist. Aufgrund der Längsteilung des Verbindungszapfens kommen beim Verspannen des Klemmsegments nur zwei gegenüberliegende Außenflächen des Zapfens mit den entsprechenden Innenwandungen des Stabelements in reibschlüssige Berührung. Die Klemmwirkung ist daher nicht optimal. Da das abspreizbare Klemmsegment über die Gesamtlänge des Verbindungszapfens bis an den Grundkörper reicht, muß in umständlicher Weise das Rohrelement, bis ein Spannen stattgefunden hat, gehalten werden, da dieses beim Aufschieben in keinerlei Weise zuvor "vororientiert", d.h. ausgerichtet wird; hierdurch besteht beim Verspannen des Klemmsegments zusätzlich die Gefahr eines Verkeilens vor Erreichen einer gesicherten Klemmposition. Aufgrund der Anordnung des Spannglieds senkrecht zur planen Rohrwandung des Stabelements, müssen das äußere Erscheinungsbild störende Zugangsbohrungen an einer der planen Rohraußenflächen vorgesehen werden.

Aus der DE-A-26 07 738 ist ein weiterer Verbindungsbeschlag bekannt, dessen Verbindungszapfen einen grundkörperseitigen Anschlußbereich aufweisen, mittels dem das aufzuschiebene Rohrende vor diametraler Verspannung des Klemmsegments durch einen Gewindestift vorzentriert werden kann. Das Klemmsegment ist hierbei relativ klein ausgeführt und zudem zwischen dem bereits erwähnten grundkörperseitigen Anschlußbereich und einem hierzu querschnittsgleichen Endbereich verschiebbar aufgenommen, wodurch die Klemmwirkung beim Abspreizen des Klemmsegments aufgrund der sehr kleinen in Eingriff mit der Rohrinnenwandung zu bringenden Reibfläche begrenzt ist.

In Vermeidung der geschilderten Nachteile liegt der vorliegenden Erfindung die Aufgabe zugrunde, einen Verbindungsbeschlag der eingangs genannten Art so zu verbessern, daß ein sichereres Verbinden der Stabelemente auf den Verbindungszapfen möglich ist, wobei mindestens die planen Außenseiten der miteinander verbundenen Stabelementen ohne optisch störende Durchbrüche zum Verspannen des Klemmsegments ausgebildet sind.

Zur Lösung dieser Aufgabe sieht die Erfindung vor, einen Verbindungsbeschlag der eingangs genannten Art mit den kennzeichnenden Merkmalen des Anspruchs 1 zu versehen.

Aufgrund der sich zum quadratischen Querschnitt ergänzende dreieckige Querschnittsformen des Klemmsegments und des Aufnahmebereichs wird beim Abspreizen des Klemmsegments in Richtung Rohrinnenwand ein gleichzeitiges Verspannen an allen senkrecht zueinander verlaufenden Rohrinnenwänden stattfinden, wodurch eine wesentlich exaktere Positionierung und Erhöhung der Klemmwirkung erzielt werden kann. Zwar ist es aus der GB-A-1 433 506 bereits bekannt, eine kleines Klemmsegment mit dreieckigem Querschnitt entlang der Querschnittsdiagonalen von dem diesen aufnehmenden Aufnahmebereich eines im wesentlichen einen viereckigen Querschnitt aufweisenden Zapfens abzuspreizen, die in Eingriff mit der betreffenden Rohrinnenwandung zu bringende Reibfläche ist jedoch sehr gering, wodurch auch bei diesem Verbindungsbeschlag die bereits erwähnten Nachteile auftreten. Aufgrund der Anordnung des Verstellelements derart, daß dieser entlang der Querschnittsdiagonalen des Verbindungszapfens verlaufend angeordnet ist, kann die entsprechende Zugangsbohrung am Stabelement an einer Kreuzung zweier ebenen Stabelementaußenflächen, d.h. an einer Kante vorgesehen werden, welche im Vergleich zu Bohrungen an flachen Rohraußenwänden weniger augenfällig ist und somit eine die Optik störende Unterbrechung der ebenen Flächen vermieden wird.

In weiterer Ausgestaltung des Verbindungsbeschlags ist vorgesehen, daß das Spannglied das Klemmsegment zusätzlich in Richtung der Verbindungszapfenlängsachse zum Grundkörper hin spannen kann, wodurch eine zusätzliche Befestigungswirkung derart hervorgerufen wird, daß die Stabelementenden kraftschlüssig am Grundkörper anschlagend gehalten werden, wodurch Zugkräfte am anderen Stabelementende bei hohen Traglasten sicher aufgenommen werden können.

Bei einer bevorzugten Ausführungsform weist der Grundkörper eine würfelartige Form auf, hat auf seinen Außenflächen zentriert die Verbindungszapfen aufgenommen, wobei jeweils eine umlaufende Anlageschulter für die Stabelementenden gebildet ist. Bei aufgeschobenen Stabelementen bilden die Außenflächen des Verbindungskörpers mit den Außenflächen der Stabelemente eine durchgehende Oberfläche ohne störenden Absatz. Hierdurch ist zudem eine besonders stabile formschlüssige Verbindung gegeben.

Zur Bildung von Schattennuten, um evt. vorhandene Fertigungstoleranzen nicht sichtbar werden zu lassen, können die Übergänge der Außenflächen zu ihren anschließenden Anlageschultern gebrochen, insbesondere gerundet ausgebildet sein. Entsprechend können auch die Stabelementenden außen gebrochen, insbesondere abgerundete Enden aufweisen.

Besonders leicht montierbar kann der Verbindungszapfen am Grundkörper über eine in der Mittelachse der Verbindungszapfen verlaufende Verbindungsschraube gehalten sein, wobei zweckmäßigerweise der Verbindungszapfen am Grundkörper lagegenau an dessen zugeordneter Außenfläche mittels mindestens einem Paßelement, insbesondere einem Paßstift positioniert ist. Vorgesehen ist, daß nur die Außenflächen des Grundkörpers die zur Aufnahme der Verbindungszapfen vorgesehen sind, Gewindebohrungen für die Verbindungsschrauben, sowie Paßbohrungen zur Aufnahme der Paßelemente aufweisen und die restlichen Außenflächen vollkommen glatt sind, wodurch das optische Erscheinungsbild störende Mittel zur Befestigung an nicht benötigten Außenflächen vermieden werden.

Große Fertigungstoleranzen können überbrückt werden, wenn das Klemmsegment im ausgesparten Aufnahmebereich des Verbindungszapfens um ein gewisses Maß frei bewegbar, vorzugsweise mit Hilfe des Spannglieds gehalten ist. Bei der Montage der Stabelementenden auf den Verbindungszapfen ist dann das Klemmsegment ohne weitere Hilfsmittel in der notwendigen Weise lagefixiert und muß nicht gesondert aufbewahrt werden. Eine konstruktive Variante des Spannglieds sieht vor, daß dieser ein Gewindebolzen sein kann, durch den das Klemmsegment vom Aufnahmebereich des Verbindungszapfens abdrückbar ist, wobei der Gewindebolzen einen Gewindebereich aufweist, der in eine entsprechende Gewindebohrung des Aufnahmebereichs eingreift und einen zylindrischen Bolzenbereich, der in eine entsprechende Aufnahmebohrung des Klemmsegments hineinragt und gesichert ist, wobei der Gewindebolzen eine Abdruckschulter zwischen dem Gewindebereich und dem zylindrischen Bolzenbereich aufweist, mittels dem das Klemmsegment von dem Aufnahmebereich abgedrückt werden kann.

In einer anderen Ausführungsvariante des Spannglieds, kann dieser ein mit gegenläufigen endseitigen Gewinden versehener Gewindebolzen sein, durch den das Klemmsegment spannschloßartig vom Aufnahmebereich des Verbindungszapfens abdrückbar ist, wobei ein Gewindebereich in eine entsprechende Gewindebohrung des Aufnahmebereichs eingreift und der entgegengesetzte Gewindebereich in eine entsprechende Eingriffsgewindebohrung des Klemmsegments eingreift, wodurch bei Drehung des Bolzens das Klemmsegment diametral von dem Aufnahmebereich zum Befestigen der Stabelementenden abgedrückt oder zum Lösen dieser zum Aufnahmebereich hin bewegt werden kann.

Gewichtssparend und bei hoher Stabilität kann der Verbindungszapfen in seiner Mittelachse eine abgesetzte Durchgangsbohrung aufweisen, durch die die Verbindungsschraube bis in den Anschlußbereich hinein geführt ist; der Gewindebolzen kann weiter in die fluchtend zueinander angeordnete Gewindebohrung und Aufnahmebohrung bzw. Gewindebohrung und Eingriffgewindebohrung aufgenommen sein, die in der Querschnittsdiagonalen des Verbindungszapfens entweder senkrecht zur Verbindungszapfenlängsachse oder von der Wandbohrung im Stabelement in Richtung Grundkörper geneigt verlaufend vorgesehen sind.

Bei dem Verbindungsbeschlag nach Anspruch 10 wird zusätzlich zur reibschlüssigen Verspannung der Stabelementenden am Verbindungszapfen durch diametrales Abspreizen des Klemmsegments ein Verspannen in Richtung Grundkörper vorgenommen, wodurch die Stabelementenden am Grundkörper anschlagend, weitestgehend spaltlos gehalten und gegen Zugkräfte besser gesichert sind.

Ein Verklemmen des Klemmsegments beim Verspannen kann konstruktiv dadurch verhindert werden, daß der Anschlußbereich und das Klemmsegment gegenüberliegend schräge stirnseitige Führungsflächen aufweisen können, die bei Relativverschiebung der Teile zueinander zusammenwirken.

Eine konstruktive Ausgestaltung des Spannglieds sieht in besonders vorteilhafter Weise vor, daß dieses eine Imbusschraube sein kann, die in einer ja der Querschnittsdiagonalen des Klemmsegements schräg zur Verbindungszapfenlängsrichtung verlaufenden Sackbohrung mit ihrem Schraubenkopf aufgenommen liegt, wobei der Gewindeschaft durch eine in der Stirnseite des Klemmsegments mündenden Durchgangsbohrung hindurch in eine coaxial zur Durchgangsbohrung verlaufende Anziehgewindebohrung in der Stirnseite des Anschlußbereichs eingreift.

Weitere erfindungsgemäße Ausbildungen sind den Unteransprüchen zu entnehmen und werden mit ihren Vorteilen anhand der beigefügten Zeichnung in der nachstehenden Beschreibung näher erläutert. Es zeigt:
Figur 1 eine isometrische Darstellung eines Verbindungsbeschlags in einer ersten Variante, bei dem ein Klemmsegment abgehoben ist;
Figur 2 eine räumliche Ansicht einer Vitrine;
Figur 3 eine Seitenansicht des Verbindungsbeschlags gemäß der ersten Variante, teilweise im Schnitt entsprechend der Linie III-III in Figur 4;
Figur 4 eine Seitenansicht des in Figur 3 dargestellten Verbindungsbeschlags in Richtung des Pfeils IV;
Figur 5 eine Seitenansicht eines Verbindungsbeschlags gemäß einer zweiten Ausführungsvariante, teilweise im Schnitt entsprechend der Linie V-V in Figur 6;
Figur 6 eine Seitenansicht des in Figur 5 dargestellten Verbindungsbeschlags in Richtung des Pfeils VI und
Figur 7 eine Seitenansicht eines Verbindungsbeschlags gemäß einer dritten Ausführungsvariante teilweise im Längsschnitt entsprechend geschnitten wie Figur 3 und 5.

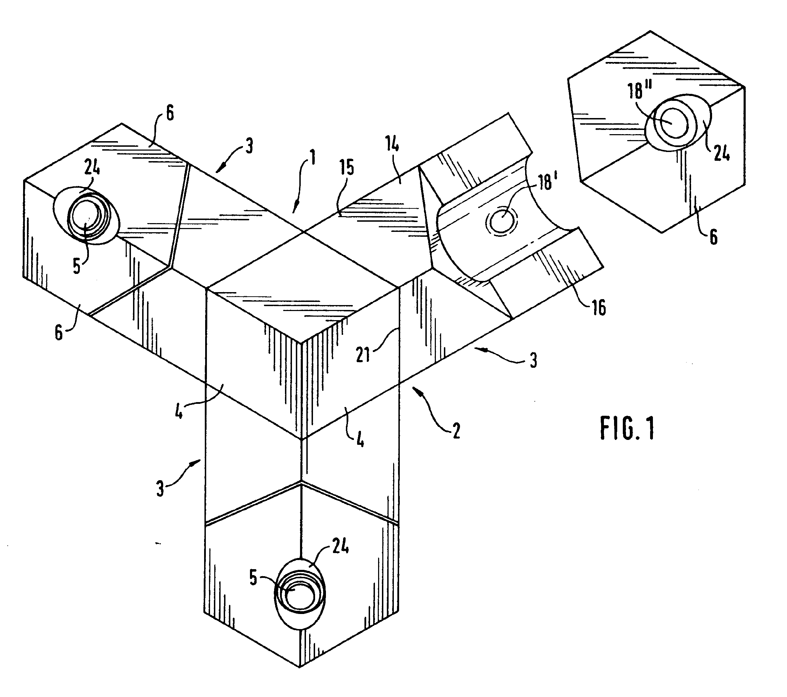

Der Verbindungsbeschlag 1 nach Figur 1 besteht aus einem würfelförmigen Grundkörper 2 dessen Außenflächen 4 drei jeweils rechtwinklig abstehende Verbindungszapfen 3 tragen. Der Grundkörper 2 ist im dargestellten Ausführungsbeispiel ein Würfel, kann aber ein beliebiger Polyeder sein, dessen Außenflächen 4 nicht zwangsläufig Plan sein müssen oder scharfe Kanten haben müssen.

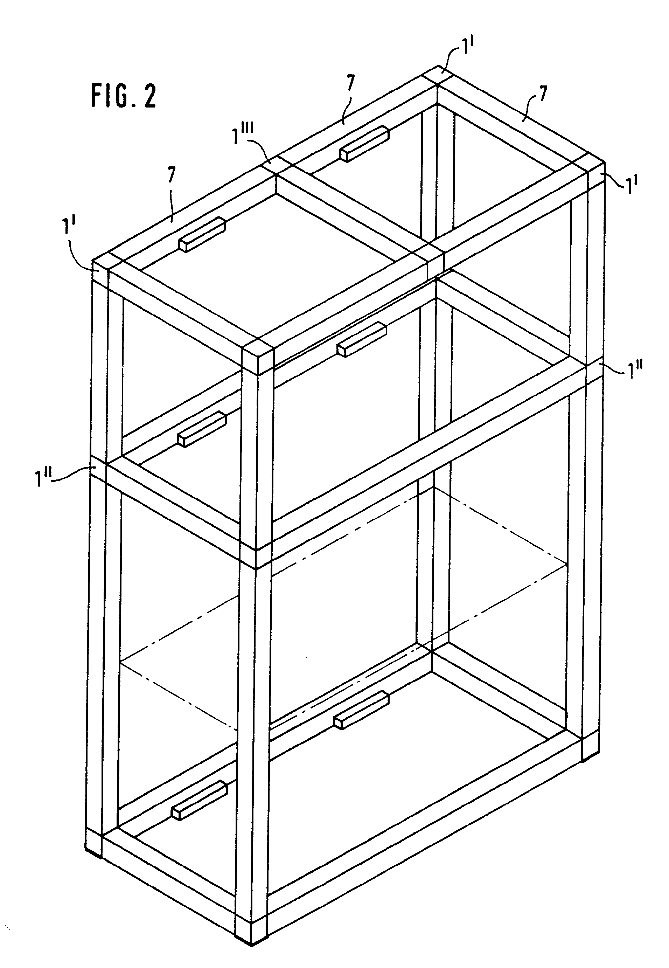

Es ist aber auch möglich, Verbindungsbeschläge 1 herzustellen, die eine andere Anzahl an Verbindungszapfen 3 aufweisen, deren Anordnung zueinander auch unterschiedlich sein kann. In Figur 2 ist beispielsweise ein roher Rahmen einer Vitrine gezeigt, bei welchem drei verschiedene Arten von Verbindungsbeschlägen 1 verwendet werden. Zum einen sind reine Eckbeschläge 1′ gezeigt, die ähnlich des in Figur 1 gezeigten aufgebaut sind, oder auch Eckverbindungsbeschläge 1˝, durch welche vier Stabelemente 7 oder Rohrelemente miteinander verbunden werden können. Ferner ist ein Verbindungsbeschlag 1‴ gezeigt, welcher zur Verlängerung von zwei Stabelementen 7 dient.

Der in den Figuren 1, 3 und 4 im einzelnen dargestellte Verbindungsbeschlag 1 gemäß einer ersten Ausführungsvariante hat drei Verbindungszapfen 3, die stirnseitig jeweils über zwei Paßstifte 11 und eine Verbindungsschraube 10 an einer der Außenflächen 4 des Grundkörpers 2 angeschraubt sind. Der Grundkörper 2 ist hierzu mit entsprechenden Gewindebohrungen 12 für die Verbindungsschrauben 10 versehen. Die Paßstifte 11 sind in entsprechend genau angeordneten Paßbohrungen 13 lagegenau eingesetzt.

Die Außenfläche 4 des Grundkörpers 2 entsprechen dem Außenquerschnitt des aufgeschobenen Stabelements 7, so daß die Außenflächen ohne Kantenbildung durchgehend eben sind. Zur optischen Überdeckung geringer Maßabweichungen können die Kanten 21, 22 der Außenflächen 4 bzw. der Stabelementenden 8 gebrochen, insbesondere gerundet sein.

Zur Aufnahme der Verbindungsschraube 10 ist der Verbindungszapfen 3 mit einer abgesetzten Durchgangsbohrung 19 versehen. Der Verbindungszapfen 3 selbst ist im wesentlichen über den größten Längenbereich diagonal zweigeteilt und nimmt in einem Aufnahmebereich 16 ein Klemmsegment 6 auf, das über ein Spannglied 5 in Form eines Gewindebolzens 5′ diagonal abspreizbar mit der Stabelementinnenwandung 23 des Stabelementendes 8 verspannbar ist. Der Außenquerschnitt des durch das Klemmsegment 6 ergänzten Aufnahmebereichs 16 und der Anschlußbereich 15 des Teils 14 des Verbindungszapfens 3 weist einen quadratischen, der Stabelementinnenwand 23 angepaßten Querschnitt auf.

Zum Abdrücken des Klemmsegments 6 ist der Gewindebolzen 5′ abgesetzt. Er weist in Verlängerung des Gewindebereichs 5˝ einen zylindrischen Bolzenbereich 5‴ und eine Abdrückschulter 5˝˝ auf, wobei der zylindrische Bolzenbereich 5‴ in einer Durchgangsbohrung 18˝ des Klemmsegments 6 aufgenommen und über einen Sicherungsring 17 lagegesichert mit etwas Spiel gehalten ist. Der Gewindebolzen 5′ selbst ist durch eine Wandbohrung 20 hindurch in einer Gewindebohrung 18′ des Aufnahmebereichs 16 des Verbindungszapfens 3 schraubbar.

Zur Aufnahme des Sicherungsrings 17 ist das Klemmsegment 6 mit einer Aussparung 24 versehen.

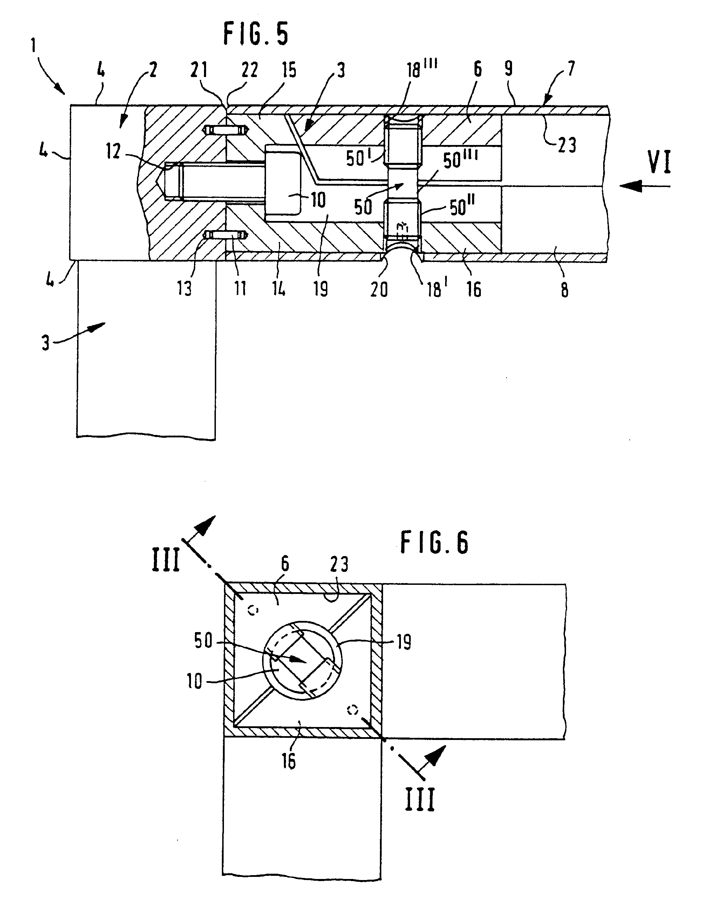

Der in den Figuren 5 und 6 in einer zweiten Ausführungsvariante dargestellte Verbindungsbeschlag ist weitestgehend mit dem in den Figuren 1, 3 und 4 beschriebenen identisch, wobei aber zum Abdrücken des Klemmsegments 6 ein andersartiger Gewindebolzen 50 vorgesehen ist. Der dort gezeigte Gewindebolzen 50 weist endseitig gegenläufige Gewindebereiche 50′, 50˝ auf, die durch einen glattflächigen Schaftbereich 50‴ voneinander getrennt sind. Der untere Gewindebereich 50′ weist ein rechtsgängiges Gewinde und der obere Gewindebereich 50′ ein linksgängiges Gewinde auf. Der untere Gewindebereich 50˝ ist in der Gewindebohrung 18′ des Aufnahmebereichs 16 und der obere Gewindebereich 50′ in einer fluchtend zur Gewindebohrung 18˝ ausgerichteten Eingriffsgewindebohrung 18‴ des Klemmsegments 6 aufgenommen, wodurch bei Drehung des Gewindebolzens 50 durch die Wandbohrung 20 des Stabelements 8 hindurch, das Klemmsegment 6 spannschloßartig diametral an die Stabelementinnenwandung 23 hin spannbar oder von dieser gelöst werden kann.

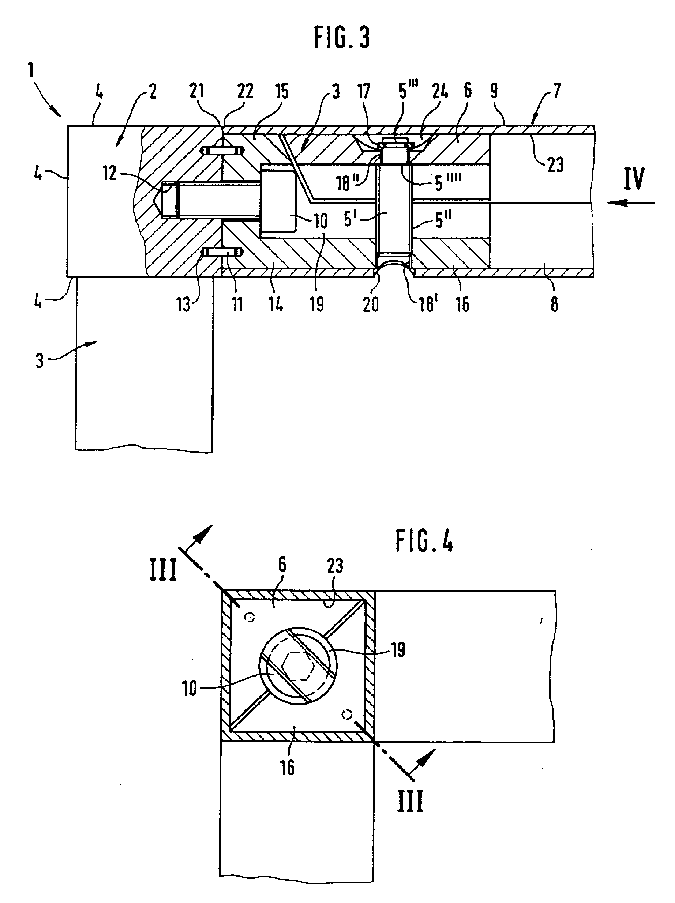

Um eine zusätzliche reibschlüssige Befestigung des Stabelements 7 am Verbindungsbeschlag 1 derart zu bewirken, daß auch erhöhte Zugkräfte aufgenommen werden können, können der Gewindebolzen 5 gemäß dem Ausführungsbeispiel nach Figur 3 und 4 als auch der Gewindebolzen 50 gemäß dem Ausführungsbeispiel nach Figur 5 und 6 statt senkrecht zur Verbindungszapfenlängsrichtung verlaufend mit einer gewissen Neigung hierzu von der Wandbohrung 20 in Richtung Grundkörper 2 hin geneigt verlaufend vorgesehen sein, wodurch bei Drehung des Gewindebolzens 5′, 50 nicht nur eine diametrale Bewegung des Klemmsegments 6 stattfindet, sondern entsprechend der Neigung der Bolzenachse eine Bewegung zum Grundkörper 2 hin ausgeführt wird.

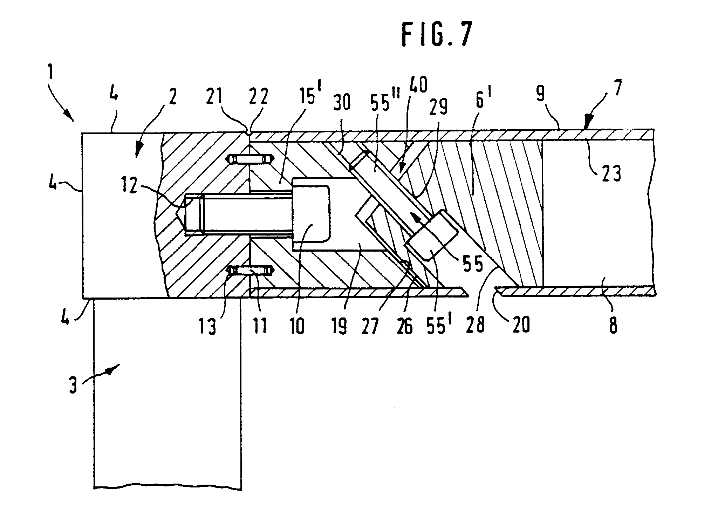

Gemäß einem weiteren Ausführungsbeispiel ist in Figur 7 ein Verbindungsbeschlag 1 gezeigt, der ebenfalls wie die bereits beschriebenen Verbindungsbeschläge drei Verbindungszapfen 3 aufweist, die stirnseitig über einen Anschlußbereich 15′ mittels zweier Paßstifte 11 und einer Verbindungsschraube 10 an einer der Außenflächen 4 des Grundkörpers 2 befestigt sind. Zur Aufnahme der Verbindungsschraube 10 ist der Anschlußbereich 15′ mit einer abgesetzten Durchgangsbohrung 19 versehen. In der grundkörperabgewandten Stirnseite des Anschlußbereichs 15′ ist eine pyramidenförmige Ausnehmung 40 vorgesehen, deren Spitze in der Mittelachse liegt und in der ein im Querschnitt quadratisch ausgebildetes Klemmsegment 6′ mit einer entsprechend der pyramidenförmigen Ausnehmung 40 geformten Stirnseite verschiebbar eingreift. Hierzu weist die Ausnehmung 40 eine Führungsfläche 27 und das Klemmsegment 6′ eine Führungsfläche 26 auf, die von der Innenwandung 23 des Stabelements 8 geneigt in Richtung Grundkörper 2 verlaufen. Das Klemmsegment 6′ ist mit dem Anschlußbereich 15′ über ein Spannglied in Form einer Imbusschraube 55 verbunden und diametrial sowie in Richtung Grundkörper 2 hin mit der Stabelementinnenwandung 23 des Stabelementendes 8 verspannbar.

Zum Bewegen des Klemmsegments 6′ liegt die Imbusschraube 55 mit ihrem Schraubenkopf 55′ in einer schräg verlaufenden Sackbohrung 28 des Klemmsegments 6′, wobei der Gewindeschaft 55 durch eine Durchgangsbohrung 29 hindurch mit einer hierzu coaxial verlaufenden Anziehgewindebohrung 30 des Anschlußbereichs 15′ zusammenwirkt. Die Neigung der Längsachse der Bohrungen 28, 29, 30 ist dabei die gleiche wie die der Führungsflächen 26, 27. Die Imbusschraube 55 ist durch eine Wandbohrung 20 hindurch schraubbar, wobei die Anziehgewindebohrung 30 und der Schraubenschaft 55′ Spiel zueinander aufweisen, wodurch eine mit Spiel behaftete Halterung des Klemmsegments 6′ am Anschlußbereich 15′ gegegeben ist.

## Patentansprüche

1. Verbindungsbeschlag (1) für Stabelemente (7) zum Aufbau von räumlichen oder ebenen Fach- oder Tragwerken, insbesondere Messeständen, Vitrinen oder Tischen, mit mindestens zwei von einem polyederförmigen Grundkörper (2) an dessen Außenflächen (4) getragene Verbindungszapfen (3), die im Querschnitt angepaßt in die hohlen Enden (8) der zu verbindenden Stabelemente (7) eingreifen, wobei jeder Verbindungszapfen (3) mindestens ein Klemmsegment (6) aufweist, das mittels eines durch eine Wandbohrung (20) der Stabelemente (7) hindurch spann- und lösbaren Spannglieds (5) innerhalb des hohlen Stabelementendes (8) gegen die Stabelementinnenwandung spannbar ist, **dadurch gekennzeichnet**, daß der Verbindungszapfen (3) ein Quader ist, der einen Anschlußbereich (15) mit quadratischem Querschnitt aufweist, mittels dem der Verbindungszapfen (3) mit dem Grundkörper (2) verbunden ist, und anschließend einen vorderen für das längliche Klemmsegment (6) ausgesparten Aufnahmebereich (16) besitzt, der zusammen mit dem Klemmsegment (6) ebenfalls einen quadratischen Querschnitt hat, wobei das Klemmsegment (6) und der Aufnahmebereich (16) sich zum quadratischen Querschnitt ergänzende dreieckige Querschnitte aufweisen, und daß das Spannglied (5) das Klemmsegment (6) in Richtung der Querschnittsdiagonalen des Verbindungszapfens (3) spannt.

2. Verbindungsbeschlag (1) nach Anspruch 1, dadurch gekennzeichnet, daß das Spannglied (5) das Klemmsegment (6) zusätzlich in Richtung der Verbindungszapfenlängsachse zum Grundkörper (2) hin spannt.

3. Verbindungsbeschlag (1) nach Anspruch 1 oder 2, dadurch gekennzeichnet, daß der Grundkörper (2) eine würfelartige Form aufweist, daß die Außenflächen (4) die Verbindungszapfen (3) zentriert aufnehmen und jeweils eine umlaufende Anlageschulter für die Stabelementenden (8) bilden, und daß bei aufgeschobenen Stabelementen (7) die Außenflächen (4) des Verbindungskörpers (2) mit den Außenflächen (9) der Stabelemente (7) eine durchgehende Oberfläche (7) bilden.

4. Verbindungsbeschlag (1) nach Anspruch 3, dadurch gekennzeichnet, daß der Übergang der Außenfläche (4) zu ihren anschließenden Anlageschultern gebrochen (Kante 21) insbesondere gerundet ausgebildet sind, und daß die Stabelementenden (8) außen gebrochene, insbesondere abgerundete Kanten (22) aufweisen.

5. Verbindungsbeschlag nach einem der Ansprüche 1 bis 4, dadurch gekennzeichnet, daß der Verbindungszapfen (3) am Grundkörper (2) über eine in der Mittelachse der Verbindungszapfen (3) verlaufende Verbindungsschraube (10) gehalten ist, daß der Verbindungszapfen (3) am Grundkörper (2) lagegenau an dessen zugeordneten Außenflächen (4) mittels mindestens einem Paßelement, insbesondere einem Paßstift (11) positioniert ist, und daß nur die Außenflächen (4) des Grundkörpers (2) die einen Verbindungszapfen (3) tragenden Aufnahmegewindebohrungen (12) für die Verbindungsschraube (10), sowie Paßbohrungen (13) zur Aufnahme der Paßelemente aufweisen und die restlichen Außenflächen (4) vollkommen glatt sind.

6. Verbindungsbeschlag (1) nach einem der Ansprüche 1 bis 5, dadurch gekennzeichnet, daß das Klemmsegment (6) im ausgesparten Aufnahmebereich (16) des Verbindungszapfens (3) um ein gewisses Maß frei bewegbar, vorzugsweise mit Hilfe des Spannglieds (5) gehalten ist.

7. Verbindungsbeschlag nach einem der Ansprüche 1 bis 6, dadurch gekennzeichnet, daß das Spannglied (5) ein Gewindebolzen (5′) ist, durch den das Klemmsegment (6) vom Aufnahmebereich (16) des Verbindungszapfens (3) abdrückbar ist, daß der Gewindebolzen (5′) einen Gewindebereich (5˝) aufweist, der in eine entsprechende Gewindebohrung (18˝) des Aufnahmebereichs (16) und einen zylindrischen Bolzenbereich (5‴) aufweist, der in eine entsprechende Aufnahmebohrung (18˝) des Klemmsegments (17) hineinragt und gesichert ist, wobei der Gewindebolzen (5′) eine Abdruckschulter (5˝˝) zwischen dem Gewindebereich (5˝) und dem zylindrischen Bolzenbereich (5‴) aufweist.

8. Verbindungsbeschlag (1) nach einem der Ansprüche 1 bis 6, dadurch gekennzeichnet, daß das Spannglied (5) ein mit gegenläufigen endseitigen Gewinden versehener Gewindebolzen (50) ist, durch den das Klemmsegment (6) vom Aufnahmebereich (16) des Verbindungszapfens (3) abdrückbar ist, daß ein Gewindebereich (50˝) in eine entsprechende Gewindebohrung (18′) des Aufnahmebereichs (16) eingreift und der entgegengesetzte Gewindebereich (50′) in eine entsprechende Eingriffsgewindebohrung (18‴) des Klemmsegments (6) eingreift, wobei durch Drehung des Bolzens (50) das Klemmsegment (6) diametral von dem Aufnahmebereich (16) abgedrückt oder zu diesem hin bewegt werden kann.

9. Verbindungsbeschlag (1) nach Anspruch 7 oder 8, dadurch gekennzeichnet, daß der Verbindungszapfen (3) in seiner Mittelachse eine abgesetzte Durchgangsbohrung (19) aufweist, durch die die Verbindungsschraube (10) bis in den Anschlußbereich (15) hineingeführt ist, und daß der Gewindebolzen (5′, 50) in die fluchtend zueinander angeordneten Gewindebohrung (18′) und Aufnahmebohrung (18˝) bzw. Gewindebohrung (18′) und Eingriffsgewindebohrung (18‴) aufgenommen ist, die in der Querschnittsdiagonalen des Verbindungszapfens (3) entweder senkrecht zur Verbindungszapfenlängsachse oder von der Wandbohrung (20) im Stabelement (7) in Richtung Grundkörper (2) hin geneigt verlaufend vorgesehen sind.

10. Verbindungsbeschlag (1) für Stabelemente (7) zum Aufbau von räumlichen oder ebenen Fach- oder Tragwerken, insbesondere Messeständen, Vitrinen oder Tischen, mit mindestens zwei von einem polyederförmigen Grundkörper (2) an dessen Außenflächen (4) getragene Verbindungszapfen (3), die im Querschnitt angepaßt in die hohlen Enden (8) der zu verbindenden Stabelemente (7) eingreifen, wobei jeder Verbindungszapfen (3) mindestens ein Klemmsegment (6) aufweist, das mittels eines durch eine Wandbohrung (20) der Stabelemente (7) hindurch spann- und lösbaren Spannglieds (5) innerhalb der hohlen Stabelementenden (8) gegen die Stabelementinnenwandung spannbar ist, **dadurch gekennzeichnet**, daß der Verbindungszapfen (3) ein Quader ist, der einen Anschlußbereich (15′) mit quadratischem Querschnitt aufweist, mittels dem der Verbindungszapfen (3) mit dem Grundkörper (2) verbunden ist und anschließend eine vordere Aussparung (40) aufweist, in der das ebenfalls einen quadratischen Querschnitt aufweisende Klemmsegment (6′) angeordnet ist, und daß das Spannglied (5) das Klemmsegment (6′) in Richtung der Querschnittsdiagonalen und in Richtung der Verbindungszapfenlängsachse zum Grundkörper (2) hin spannt.

11. Verbindungsbeschlag (1) nach Anspruch 10, dadurch gekennzeichnet, daß der Anschlußbereich (15′) und das Klemmsegment (6′) gegenüberliegend schräge stirnseitige Führungsflächen (26,27) aufweisen.

12. Verbindungsbeschlag (1) nach einem der Ansprüche 10 oder 11, dadurch gekennzeichnet, daß das Spannglied (5) eine Imbusschraube (55) ist, die in einer in der Querschnittsdiagonalen des Klemmsegements (6′) schräg zur Verbindungszapfenlängsrichtung verlaufenden Sackbohrung (28) mit ihrem Schraubenkopf (55) aufgenommen liegt, wobei der Gewindeschaft (55˝) durch eine in der Stirnseite des Klemmsegments (6′) mündenden Durchgangsbohrung (29) hindurch in eine coaxial zur Durchgangsbohrung (29) verlaufende Anziehgewindebohrung (30) in der Stirnseite des Anschlußbereichs (15′) eingreift.

## Claims

1. A joint fitting (1) for bar elements (7) for the construction of three-dimensional or flat frameworks or load-bearing structures, in particular fair stands, display showcases or tables, having at least two assembly studs (3) borne by the outer surfaces (4) of a polyhedral basic component (2), which engage in adapted cross-section in the hollow ends (8) of the bar elements (7) which are to be assembled , whereby each assembly stud (3) has at least one clamping segment (6) which can be clamped inside the hollow end (8) of the bar element against the inner wall of the bar element by means of a tensioning element (5) which can be tightened and untightened through a hole (20) drilled in the wall of the bar element (7), characterised in that the assembly stud (3) is a cuboid having an assembly area (15) of square cross-section, by means of which the assembly stud (3) is connected to the basic component (2), and has adjacent to its assembly area (15) a front locating area (16) which is recessed to accommodate the oblong clamping segment (6), which together with the clamping segment (6) also has a square cross-section, whereby the clamping segment (6) and the locating area (16) have triangular cross-sections combining together to form a square cross-section, and in that the tensioning element (5) tightens the clamping segment (6) in the direction of the diagonal cross-sectional lines of the assembly stud (3).

2. A joint fitting (1) as claimed in Claim 1, characterised in that the tensioning element (5) additionally tightens the clamping segment (6) to the basic component (2) in the direction of the longitudinal axis of the assembly stud.

3. A joint fitting (1) as claimed in either one of Claims 1 or 2, characterised in that the basic component (2) has a cube-like shape, in that the outer surfaces (4) centrically accommodate the assembly studs (3) and each forms a circumferential contact shoulder for the bar element ends (8), and in that with the bar elements (7) slipped on, the outer surfaces (4) of the assembly component (2) form a continuous surface (7) with the outer surfaces (9) of the bar elements (7).

4. A joint fitting (1) as claimed in Claim 3, characterised in that the transition from the outer surface (4) to its adjacent contact shoulders is cut off (edge 21), in particular rounded, and in that the outer side of the bar element ends (8) have cut-off, in particular rounded edges (22).

5. A joint fitting as claimed in any of Claims 1 to 4, characterised in that the assembly stud (3) is secured to the basic component (2) by a connecting bolt (10) aligned in parallel with the centre line of the assembly stud (3), in that the connecting stud (3) is positioned accurately in relation to the corresponding outer surfaces (4) of the basic component (2) by means of at least one alignment element, in particular an alignment pin (11), and in that the assembly-pin (3) supporting outer surfaces (4) of the basic component (2) have threaded locating holes (12) for supporting an assembly-pin (3) and alignment holes (13) for accommodating the aligning elements, the remaining outer surfaces (4) being entirely smooth.

6. A joint fitting (1) as claimed in any of Claims 1 to 5, characterised in that the clamping segment (6) is held relatively freely moveable, preferably with the aid of the tensioning element (5), in the recessed locating area (16) of the assembly stud (3).

7. A joint fitting as claimed in any of Claims 1 to 6, characterised in that the tensioning element (5) is a threaded bolt (5′), by means of which the clamping segment (6) can be forced off the locating area (16) of the assembly stud (3), in that the threaded bolt (5′) has a threaded area (5˝) which engages and is secured in a corresponding threaded hole (18′) of the locating area (16) and has a cylindrical bolt area (5‴) which engages and is secured in a corresponding locating hole (18˝) of the clamping segment (17), whereby the threaded bolt (5′) has a shoulder (5˝˝) between the threaded area (5˝) and the cylindrical bolt area (5‴).

8. A joint fitting (1) as claimed in any one of Claims 1 to 6, characterised in that the tensioning element (5) is a threaded bolt (50) provided with opposed threads at each end, by means of which the clamping segment (6) can be forced off the locating area (16) of the assembly stud (3), in that one threaded area (50˝) engages in a corresponding threaded hole (18′) of the locating area (16) and the opposite threaded area (50′) engages in a corresponding threaded contact hole (18‴) of the clamping segment (6), whereby on turning the bolt (50), the clamping segment (6) can be forced diametrally away from the locating area (16) or moved towards the latter.

9. A joint fitting (1) as claimed in Claims 7 or 8, characterised in that the assembly stud (3) has a shouldered aperture (19) in its centre line, through which the connecting bolt (10) is introduced up to the assembly area (15), and in that the threaded bolt (5 , 50) is accommodated in the mutually aligned threaded hole (18 ) and locating hole (18˝) or respectively the threaded hole (18′) and threaded contact hole (18‴), which are provided in the diagonal cross-sectional lines of the assembly stud (3), aligned either in perpendicular to the longitudinal axis of the assembly stud, or inclined at an angle from the hole (20) drilled in the wall of the bar element (7) in the direction of the basic component (2).

10. A joint fitting (1) for bar elements (7) for the construction of three-dimensional or flat frameworks or load-bearing structures, in particular fair stands, display showcases or tables, having at least two assembly studs (3) borne by the outer surfaces (4) of a polyhedral basic component (2), which engage in adapted cross-section in the hollow ends (8) of the bar elements (7) which are to be assembled, whereby each assembly stud (3) has at least one clamping segment (6) which can be clamped inside the hollow end (8) of the bar element against the inner wall of the bar element by means of a tensioning element (5) which can be tightened and untightened through a hole (20) drilled in the wall of the bar element (7), characterised in that the assembly stud (3) is a cuboid which has an assembly area (15′) of square cross-section, by means of which the assembly stud (3) is connected to the basic component (2), and has adjacent to the assembly area (15′) a front recess (40) in which is arranged the clamping segment (6′) also of square cross-section, and in that the tensioning element (5) tightens the clamping segment (6′) to the basic component (2) in the direction of the cross-sectional diagonal lines and in the direction of the longitudinal axis of the assembly stud.

11. A joint fitting (1) as claimed in Claim 10, characterised in that the assembly area (15′) and the clamping segment (6′) have oppositely located diagonal guide surfaces on their respective faces (26,27).

12. A joint fitting (1) as claimed in either one of Claims 10 or 11, characterised in that the tensioning element (5) is a hexagonal socket screw (55) which is accommodated with its screw head (55) in a pocket hole (28) aligned at an angle from the longitudinal axis of the assembly stud in the cross-sectional diagonal lines of the clamping segment (6′), whereby the threaded shaft (55˝) engages, through an aperture (29) opening on the face of the clamping segment (6′), in a threaded tightening hole (30) aligned coaxially with the aperture (29) on the face of the assembly area (15′).

## Revendications

1. Ferrure d'assemblage (1) pour éléments (7) en barre destinés à la construction de charpente en treillis ou d'ossature porteuse, tridimensionnels ou plans, en particulier pour stands d'exposition, vitrines ou tables, ayant au moins deux tenons d'assemblage (3), portés par un corps de base (2) polyédrique, sur des surfaces extérieures (4) de ce corps, ces tenons s'engageant dans les parties extrêmes creuses (8) des éléments (7) en barre à assembler, auxquelles ils sont adaptés en section droite, chaque tenon d'assemblage (3) présentant au moins un segment de blocage (6) qui peut être serré contre la surface intérieure de l'élément en barre, à l'intérieur de la partie extrême creuse (8) de cet élément en barre, au moyen d'un organe de serrage (5) serrable et desserrable à travers un trou (20) de la paroi des éléments (7) en barre, caractérisée en ce que le tenon d'assemblage (3) est un parallélépipède qui présente une zone (15) de raccordement à section droite carrée par laquelle ce tenon d'assemblage (3) est assemblé au corps de base (2), et qui possède à sa suite une région avant de réception (16) évidée pour recevoir le segment de blocage (6) de forme allongée, cette région de réception ayant ensemble avec le segment de blocage (6) une section droite carrée, le segment de blocage (6) et la région de réception (16) ayant une section droite triangulaire se complétant pour constituer la section droite carrée, et en ce que l'organe de serrage (5) serre le segment de blocage (6) selon la direction de la diagonale de la section droite du tenon d'assemblage (3).

2. Ferrure d'assemblage (1) selon la revendication 1, caractérisée en ce que l'organe de serrage (5) serre additionnellement le segment de blocage (6) dans la direction de l'axe longitudinal du tenon d'assemblage, vers le corps de base (2).

3. Ferrure d'assemblage (1) selon la revendication 1 ou 2, caractérisée en ce que le corps de base (2) présente la forme d'un cube, en ce que les surfaces extérieures (4) reçoivent le tenon d'assemblage (3) en position centrée et forment chacune un épaulement d'appui périphérique pour les extrémités (8) des éléments en barre et en ce que, quand les éléments (7) en barre sont emmanchés, les surfaces extérieures (4) du corps d'assemblage (2) forment une surface continue (7) avec les surfaces des éléments (7) en barre.

4. Ferrure d'assemblage (1) selon la revendication 3, caractérisée en ce que les passages entre les surfaces extérieures (4) et leurs épaulements d'appui s'y raccordant sont abattues (arête 21), en particulier arrondies, et en ce que les extrémités (8) des éléments en barre présentent des arêtes (22) abattues, notamment arrondies, à l'extérieur.

5. Ferrure d'assemblage selon une des revendications 1 à 4, caractérisée en ce que le tenon d'assemblage (3) est fixé au corps de base (2) au moyen d'une vis d'assemblage (10) qui s'étend dans l'axe médian du tenon d'assemblage (3), en ce que le tenon d'assemblage (3) est positionné sur le corps de base (2) en position précise, sur ses surfaces extérieures (4), à l'aide d'au moins un élément de centrage, notamment d'un pied de centrage (11) et en ce que seules les surfaces extérieures (4) du corps de base (2) portant un tenon d'assemblage (3) présentent des trous taraudés de réception (12) pour les vis d'assemblage (10), ainsi que des trous alésés (13) pour la réception des éléments de centrage, et les autres surfaces extérieures (4) sont entièrement lisses.

6. Ferrure d'assemblage (1) selon une des revendication 1 à 5, caractérisé en ce que le segment de blocage (6) est tenu dans la région de réception (16) évidée du tenon d'assemblage (3) de façon à être déplaçable librement d'une certaine distance, de préférence à l'aide de l'organe de serrage (5).

7. Ferrure d'assemblage selon une des revendications 1 à 6, caractérisée en ce que l'organe de serrage (5) est une vis (5′) à l'aide de laquelle le segment de blocage (6) peut être écarté de la région de réception (16) du tenon d'assemblage (3) , en ce que la vis (5′) présente une partie filetée (5˝) qui se visse dans un trou taraudé correspondant (18˝) de la région de réception (16) et une partie de vis cylindrique (5‴) qui est engagée et retenue dans un trou de réception correspondant (18˝) du segment de blocage (17), la vis (5′) présentant un épaulement de poussée (5˝˝) entre la partie filetée (5˝) et la partie cylindrique (5‴).

8. Ferrure d'assemblage (1) selon une des revendications 1 à 6, caractérisée en ce que l'organe de serrage (5) est une vis (50) prévue avec des parties extrêmes à filetages de sens opposés, à l'aide de laquelle le segment de blocage (6) peut être écarté de la région de réception (16) du tenon d'assemblage (3), en ce qu'une partie filetée (50˝) se visse dans un trou fileté correspondant (18′) de la région de réception (16) tandis que la partie filetée opposée (50′) se visse dans un trou fileté de vissage correspondant (18‴) du segment de blocage (6), la rotation de la vis (50) pouvant déplacer diamétralement le segment de blocage (6) en le poussant à partir de la région de réception (16) ou en l'attirant vers cette région.

9. Ferrure d'assemblage (1) selon la revendication 7 ou 8, caractérisée en ce que le tenon d'assemblage (3) présente dans son axe médian un trou traversant épaulé (19) à travers lequel la vis d'assemblage (10) est enfilée jusque dans la zone (15) de raccordement, et en ce que la vis (5′, 50) s'introduit dans le trou fileté (18′) et le trou de réception (18˝) alignés l'un avec l'autre ou dans le trou fileté (18′) et le trou fileté de vissage (18‴) alignés l'un avec l'autre, trous qui sont prévus dans la diagonale de la section droite du tenon d'assemblage (3), soit perpendiculairement à l'axe longitudinal du tenon d'assemblage, soit obliquement dans la direction du corps de base (2) à partir du trou (20) de la paroi de l'élément (7) en barre.

10. Ferrure d'assemblage (1) pour éléments (7) en barre destinés à la construction de charpente en treillis ou d'ossature porteuse tridimensionnels ou plans, en particulier pour stands d'exposition, vitrines ou tables, ayant au moins deux tenons d'assemblage (3), portés par un corps de base (2) polyédrique, sur les surfaces extérieures (4) de ce corps, ces tenons s'engageant dans les partis extrêmes creuses (8) des éléments (7) en barre à assembler, auxquelles ils sont adaptés en section droite, chaque tenon d'assemblage (3) présentant au moins un segment de blocage (6) qui peut être serré contre la surface intérieure de l'élément en barre à l'intérieur de la partie extrême creuse (8) de cet élément en barre au moyen d'un organe de serrage (5) serrable et desserrable à travers un trou (20) de la paroi des éléments en barre, caractérisée en ce que le tenon d'assemblage (3) est un parallélépipède qui présente une zone (15′) de raccordement à section droite carrée par laquelle le tenon d'assemblage (3) est assemblé au corps de base (2) et qui possède à sa suite un évidement avant (40) dans lequel est disposé le segment de blocage (6′) ayant aussi une section droite carrée, et en ce que l'organe de serrage (5) serre le segment de blocage (6′) dans la direction de la diagonale de la section droite et dans la direction de l'axe longitudinal du tenon d'assemblage, vers le corps de base (2).

11. Ferrure d'assemblage (1) selon la revendication 10, caractérisée en ce que la zone (15′) de raccordement et le segment de blocage (6′) présentent des surfaces de guidage frontales obliques (26, 27) opposées l'une à l'autre.

12. Ferrure d'assemblage (1) selon une des revendications 10 et 11, caractérisée en ce que l'organe de serrage (5) est une vis (55) à tête à empreinte qui se loge dans un trou borgne (28) s'étendant obliquement par rapport à la direction longitudinale du tenon d'assemblage, sur la diagonale de la section droite du segment de blocage (6′), la tige filetée (55˝) de la vis étant enfilée à travers un trou traversant (29) qui débouche dans une face frontale du segment de blocage (6′), pour se visser dans un trou fileté de tirage (30) s'ouvrant dans la face frontale de la zone (15′) de raccordement et s'étendant coaxialement au trou traversant (29).
